# EUROPÄISCHE PATENTSCHRIFT

(11) **EP 1 749 654 B1**
(45) Veröffentlichungstag und Bekanntmachung des Hinweises auf die Patenterteilung: **20.06.2012**
(21) Anmeldenummer: 06015780.7
(22) Anmeldetag: 28.07.2006
(51) Int. Cl.: B32B 3/10, B65D 85/16

(54) **Mehrschichtige Verpackungsfolie**
Multi-layer packaging film
Feuille multicouche d'emballage

(30) Priorität: 02.08.2005 DE 202005012104 U
(43) Veröffentlichungstag der Anmeldung: 07.02.2007
(73) Patentinhaber: SCA Hygiene Products GmbH, 68305 Mannheim (DE)
(72) Erfinder: Malke, Wolfgang, 67316 Carlsberg (DE)
(74) Vertreter: HOFFMANN EITLE

(56) Entgegenhaltungen:
- DE-A1- 2 536 304
- DE-A1- 3 542 565
- DE-A1- 4 109 605
- DE-C2- 3 546 877
- US-A- 4 080 235

## Beschreibung

Die vorliegende Erfindung betrifft eine Verpackungsfolie aus Kunststoff, bestehend aus mindestens drei verschiedenen Schichten, wobei die beiden äußeren Schichten aus elastischen Kunststoffen bestehen und jeweils mit einem Einschnitt im wesentlichen senkrecht zur Folienoberfläche versehen sind und die zwischen den beiden äußeren Schichten sich befindende mittlere Schicht aus harten, spröden Kunststoffen besteht und keinen Einschnitt oder nur einen solchen Einschnitt aufweist, der weniger als 50 % der Schichtdicke der mittleren Schicht beträgt.

Verpackungsmaterialien bestehen heute meist aus Kunststoffen, da diese den Inhalt der Verpackungen schonend und geruchsneutral einschließen können, weiterhin gute mechanische und thermische Eigenschaften aufweisen und auf Grund ihrer optischen Transparenz und ihrer leichten Bedruckbarkeit ohne großen Aufwand ansprechend ausgestaltet werden können. Darüber hinaus handelt es sich bei Kunststoffen in der Regel um preiswerte und gut zugängliche Materialien, die für den Einsatz bei Massenartikeln geeignet sind.

Bei der Verpackung von Hygienepapieren, beispielsweise von Papiertaschentüchern wird der Verschluss der verwendeten Kunststoffpackung durch eine Überlappung der einzelnen Folien hergestellt. Der erstmalige Verschluss dieser Verpackungen erfolgt üblicherweise durch einen sogenannten Siegellack, der sich auf der Innenseite der Verpackungsfolie befindet und der durch Wärme im Verarbeitungsprozeß aktiviert wird. Aus technischen Gründen lässt sich die Art der Öffnung der Verpackung nicht an jeder Stelle der Verpackung beliebig platzieren.

Aus der WO 95/09794 ist eine Methode zum Verbinden von zwei verschiedenen thermoplastischen Folien bekannt, wobei der überlappende Flächenbereich der Folien durch Wärme behandelt wird. Gegenstand der US-A 5,704,539 ist ein Container, der eine Verpackung aus einem Laminat enthält, wobei dieses aus zwei äußeren Kunststoffschichten und einer mittleren Schicht aus Pappkarton besteht. Eine der beiden äußeren Kunststoffschichten wird dabei mit einem Einschnitt versehen.

Die Offenlegungsfrist 25 36 304 offenbart ein Verfahren zur Herstellung laminierter Materialbahnen mit festen Kantenstreifen. In diesem Verfahren werden geteilte laminierte Materialbahnen mit je einer zentralen Grundschicht mit beiderseitigen Schichten aus Überzugsmaterial hergestellt, deren eine über die eine Kante der Bahn vorspringt und einen festen Kantenstreifen bildet. Das Verfahren ist dadurch gekennzeichnet, dass das laminierte Material an jeder Teilungsstelle teilweise eingeschnitten wird, so dass einander gegenüberliegende Schnitte gebildet werden, die seitlich gegeneinander versetzt angeordnet sind in einem Abstand, der der gewünschten Breite des Streifens entspricht, wobei sich der eine Schnitt voll durch die eine Schicht des Überzugsmaterials erstreckt und der andere Schnitt sich voll durch die andere Schicht des Überzugsmaterials und im Wesentlichen durch die Grundschicht hindurch erstreckt.

Die US-Patentschrift 4,080,235 offenbart ein laminiertes Gewebe, das eine innere Basisschicht aus Papier, umgeben von zwei thermoplastischen Schichten umfasst. Das laminierte Gewebe ist longitudinal in einer Mehrzahl von getrennten Geweben verschnitten, von denen jedes anschließend in einer Verpackungsmaschine verwendet wird. Dabei wird das laminierte Gewebe zu einer schlauchartigen Konfiguration mit überlappenden Endbereichen geformt.

Die Patentschrift DE 35 46 877 C2 offenbart ein Schlitzwerkzeug zur Einbringung von durchgehenden Schlitzen in einem Film, mit mehreren auf einer geschlossenen Werkzeugoberfläche befindlichen, schlitzbildenden Vorsprüngen, die jeweils von einer in der Werkzeugoberfläche ausgebildeten Vertiefung vorstehen und die an den jeweiligen Vertiefungen zugewandten Flächen Steilflächen ausbilden, während gekrümmte Seitenkanten scharfe Schneidkanten bilden, die derart orientiert sind, dass sie geradlinig in die entsprechenden Abschnitte des Films eindringen, wobei die Steilflächen der Vorsprünge jeweils über äußere, schräge Flächen auf den den Vertiefungen in der geschlossenen Werkzeugoberfläche abgewandten, dem Film zugewandten Seiten in die Werkzeugoberfläche übergehen.

Die Offenlegungsschrift DE 35 42 565 A1 offenbart eine leicht zu öffnende, dicht verschließbare Kunststofftüte, die aus einen mindestens eine Substratschicht und Heißsiegelschicht enthaltenden Film mit versiegeltem Abschnitt, dessen Substratschicht eine Vielzahl von Einschnitten aufweist, besteht, welche an den Kantenlinien angeordnet und teilweise oder vollständig von der Heißsiegelschicht verschlossen sind.

Die bisher eingesetzten Verpackungsfolien sind für einige Anwendungsbereiche, bei denen bestimmte leicht flüchtige Stoffe luftdicht verpackt werden sollen, nicht immer gut geeignet, da nach der Entnahme eines Teils des Verpackungsinhalts die geöffnete Verpackung nicht wieder völlig dicht verschlossen werden kann. Derartige Nachteile schränken insbesondere die Brauchbarkeit von bedufteten oder lotionierten Hygienepapieren deutlich ein, da nach der erstmaligen Entnahme einiger Hygienepapiere die restliche Verpackung nicht mehr vollständig verschlossen werden kann, was ein teilweises Entweichen der Duftstoffe zur Folge haben kann.

Der vorliegenden Erfindung lag daher die Aufgabe zu Grunde, den geschilderten Nachteilen abzuhelfen und eine verbesserte Verpackungsfolie zu entwickeln.

Demgemäß wurde eine verbesserte Verpackungsfolie aus Kunststoff entwickelt, bestehend aus mindestens drei verschiedenen Schichten, wobei die beiden äußeren Schichten aus elastischen Kunststoffen bestehen und jeweils mit einem Einschnitt im wesentlichen senkrecht zur Folienoberfläche versehen sind und die zwischen den beiden äußeren Schichten sich befindende mittlere Schicht aus harten, spröden Kunststoffen besteht und keinen Einschnitt oder nur einen solchen Einschnitt aufweist, der weniger als 50 % der Schichtdicke der mittleren Schicht beträgt.

Die erfindungsgemäße Verpackungsfolie besteht aus mindestens drei verschiedenen Kunststoffschichten, wobei selbstverständlich auch vier, fünf, sechs oder noch mehr Kunststoffschichten denkbar sind.

Die beiden äußeren Kunststoffschichten sind aus elastischen Kunststoffen aufgebaut, wogegen die mittlere Schicht aus harten, spröden Kunststoffen besteht. Falls die Verpackungsfolie mehr als 3 Schichten enthält, so kann diese selbst-verständlich auch mehr als zwei äußere Schichten und mehr als eine mittlere Schicht aufweisen, beispielsweise zwei äußere Schichten und in der Mitte zwei mittlere Schichten (insgesamt 4 Schichten) oder aber jeweils zwei äußere Schichten oben und unten und in der Mitte eine mittlere Schicht (insgesamt 5 Schichten).

Geeignete Kunststoffe, aus denen die einzelnen Folienschichten bestehen, sind insbesondere thermoplastische Kunststoffe. Als thermoplastische Kunststoffe kommen insbesondere Polyolefine, wie zum Beispiel Polyethylen oder Polypropylen, ferner Polyvinylchlorid, Polyurethane, Polysulfone, Polyetherketone, Polyester, Polycycloolefine, Polyacrylate, Polymethacrylate, Polyamide, Polycarbonate, Polyacetale wie zum Beispiel Polyoxymethylen, Polybutylenterephthalate und Polystyrole in Betracht. Dabei sind sowohl Homopolymere als auch Copolymere dieser thermoplastischen Kunststoffe verwendbar. Vorzugsweise bestehen die in der erfindungsgemäßen Verpackungsfolie vorliegende Schichten aus Polyethylen oder Polypropylen.

Unter der Bezeichnung Polyethylen sollen dabei sowohl Homopolymere als auch Copolymere des Ethylens mit untergeordneten Anteilen anderer C₃-C₁₀-Alk-1-ene, beispielsweise mit Propylen, But-1-en, Pent-1-en, Hex-1-en, Hept-1-en oder Oct-1-en verstanden werden. Weiterhin kommen hierbei Copolymere des Ethylens mit copolymerisierbaren polaren Comonomeren in Betracht, beispielsweise mit Vinylacetat oder mit ungesättigten Acrylaten oder Methacrylaten. Derartige Polyethylene sind u.a. durch Dichten von 0,89 bis 0,98 g/cm³, insbesondere von 0,89 bis 0,96 g/cm³ gekennzeichnet.

Weiterhin eignen sich als Materialien für die Kunststoffschichten insbesondere Homo-oder Copolymere des Propylens mit untergeordenten Anteilen anderer C₂-C₁₀-Alk-1-ene, beispielsweise mit Ethylen oder mit But-1-en, Pent-1-en, Hex-1-en, Hept-1-en oder Oct-1-en. Es können dabei auch zwei oder mehrere verschiedene Comonomere im Polypropylen verwendet werden. Die als Folien verwendeten Polypropylene weisen in der Regel eine Schmelzflussrate (MFR), nach ISO 1133, von 0,1 bis 200g/10min., insbesondere von 0,2 bis 150 g/10min. und besonders bevorzugt von 0,5 bis 100 g/10 min., bei 230°C und unter einem Gewicht von 2,16 kg, auf.

Bei der erfindungsgemäßen Verpackungsfolie werden für die äußeren Kunststoffschichten insbesondere solche elastischen Kunststoffe verwendet, welche eine Glastemperatur (Tg) von weniger als +10°C, vorzugsweise von weniger als 0°C und besonders bevorzugt von weniger als -10°C aufweisen. Die harten, spröden Kunststoffe, welche die mittlere Schicht der Verpackungsfolie bilden, sollten eine Glastemperatur (Tg) von mehr als 20°C, insbesondere von mehr als 25°C und besonders bevorzugt von mehr als 30°C aufweisen. Bei der Glastemperatur oder auch Glasübergangstemperatur (Tg) handelt es sich um diejenige Temperatur, ab der die Kunststoffe ihre Segmentbeweglichkeit verlieren, d.h. in einen spröden, glasartigen Zustand übergehen. Die Glastemperatur (Tg) wird u.a. nach der DSC-Methode ermittelt (Differential Scanning Calorimetry).

Die Verpackungsfolie ist weiterhin dadurch gekennzeichnet, dass die äußeren Schichten, welche die mittlere Schicht oder aber die mittleren Schichten sandwichartig begrenzen und jeweils aus elastischen Kunststoffen bestehen, jeweils mit einem Einschnitt im wesentlichen senkrecht zur Folienoberfläche versehen sind. Im wesentlichen senkrecht zur Folienoberfläche bedeutet dabei, dass der Winkel zwischen der Folienoberfläche der äußeren Schichten und den jeweiligen Einschnitten mindestens 50°, insbesondere mindestens 60°, bevorzugt mindestens 70° und besonders bevorzugt mindestens 80° beträgt.

Die Einschnitte in die äußeren Schichten der erfindungsgemäßen Verpackungsfolie können dabei u.a. durch rotierende Messer vorgenommen werden. Geeignete rotierende Messer sind u.a. sogenannte Rotationsmesser für Formschnitte an Hygieneprodukten sowie sogenannte Messerwalzen, insbesondere Stahlmesserwalzen.

Darüber hinaus ist es auch möglich, die Einschnitte in den einzelnen Schichten der Verpackungsfolie mit Hilfe von Lasern durchzuführen. Dabei kann es sich empfehlen, die Laserstrahlen mit Hilfe von sich rasch bewegenden Spiegeln in geeigneter Weise in Richtung auf diese Schichten der Verpackungsfolie umzulenken. Geeignete Laser sind dabei u.a. Gaslaser wie CO₂-Laser, CO-Laser, Stickstofflaser, Helium-Neon-Laser oder aber Argon-Ionenlaser, Flüssiglaser wie beispielsweise Farbstofflaser oder aber Festkörperlaser, wie Rubinlaser oder YAG-Laser, sowie Diodenlaser, wobei diese Aufzählung nicht als abschließend zu werten ist.

Die mittlere Schicht der Verpackungsfolie weist keinen solchen Einschnitt auf, oder aber nur einen solch kleinen Einschnitt, dass dessen Länge weniger als 50 % der gesamten Schichtdicke der mittleren Schicht, insbesondere weniger als 40 % der gesamten Schichtdicke der mittleren Schicht, besonders bevorzugt weniger als 30 % der gesamten Schichtdicke der mittleren Schicht und ganz besonders bevorzugt weniger als 20 % der gesamten Schichtdicke der mittleren Schicht beträgt.

Die Einschnitte in den äußeren Schichten können sowohl im sogenannten Convertingteil bei der Herstellung von derartigen Verpackungen, als auch in den nachfolgenden Druck- und Konfektioniermaschinen ausgeführt werden. Bevorzugt sollten die Einschnitte auf der Druckmaschine durchgeführt werden, um so ein möglichst gleichmäßiges Register bei den einzelnen Produkten zu gewährleisten.

Die erfindungsgemäße Verpackungsfolie weist üblicherweise eine Dicke von 0,01 bis 10 mm, insbesondere von 0,05 bis 5 mm und besonders bevorzugt von 0,1 bis 2 mm auf, wobei die einzelnen Schichten sowohl in etwa gleich dick sein können, als auch eine unterschiedliche Dicke aufweisen können.

Dadurch dass die äußeren Schichten der Verpackungsfolie mit Einschnitten versehen sind, genügt eine verhältnismäßig geringe Krafteinwirkung durch den Verbraucher, beispielsweise durch ein geeignetes Öffnungsband (Öffnungstape), um die Verpackung zu öffnen. Dies ist darauf zurückzuführen, dass die spröde, mittlere Folienschicht oder die spröden mittleren Folienschichten an einer Sollbruchstelle zwischen den Enden der beiden Einschnitte der äußeren Schichten durchreißt. Auf diese Weise ist es möglich, durch Festlegen der zwei Einschnitte an den beiden äußeren Schichten die Öffnung an einer bestimmten Stelle der Verpackungsfolie zu plazieren.

Die erfindungsgemäße Verpackungsfolie eignet sich für alle Arten von üblichen Materialien, welche möglichst luftdicht verschlossen werden müssen, bespielsweise für Nahrungs- und Genußmittel, für Hygieneprodukte oder aber für Materialien im sanitären, im pharmazeutischen sowie im medizinischen Bereich. Besonders gute Anwendungsmöglichkeiten ergeben sich als Verpackungsmittel von Hygiene-papieren wie Papiertaschentücher, Küchenrollen, Toilettenpapiere, Wischtücher, Gesichtstücher, Feuchttücher oder aber Servietten. Dies zeigt sich insbesondere bei der Verpackung von bedufteten oder lotionierten Hygienepapieren, da die erfindungsgemäße Verpackungsfolie einen luftdichten Verschluß dieser Produkte gewährleistet.

Die erfindungsgemäße Verpackungsfolie eignet sich u.a. für gerollte, gestapelte und einzeln entnehmbare Hygienepapiere, welche auch als sogenannte Tissueprodukte bezeichnet werden. Derartige Tissueprodukte können bei Bedarf entsprechend ge-faltet, gekreppt oder geknickt werden sowie gegebenenfalls mit einer geeigneten Perforation oder Trennlinie versehen werden. Um derartigen Tissueprodukten bei Verbrauchern einen vorteilhaften Eindruck zu verschaffen, kann es sich auch empfehlen, diese mit einem optisch ansprechenden ein- oder mehrfarbigen Muster zu versehen, welches in verschiedenartiger Weise ausgestaltet werden kann. Derartige, mit einem Muster versehene Hygienepapiere können u.a. durch Bedrucken oder aber durch eine entsprechende Dekorprägung erhalten werden. Bei den hier aufgeführten Tissueprodukten kann es sich um einlagige, zweilagige, dreilagige, vierlagige, fünflagige oder noch höherlagige Hygienepapiere handeln.

Geeignete Rohmaterialien für derartige Hygienepapiere sind u.a. Zellstoffe, die nach üblichen Aufschlussverfahren, beispielsweise nach dem Sulfitverfahren oder dem Sulfatverfahren aus Nadelholz, beispielsweise aus Fichten-, Tannen-, Kiefern- oder Lärchenholz, aus Laubholz, beispielsweise aus Buchen-, Birken-, Pappel-, oder Eukalyptusholz oder aber aus Einjahrespflanzen beispielsweise aus Baumwolle, Bambus, Hanf oder Sisal gewonnen werden. Daneben können auch Kunstfasern, wie beispielsweise Polyethylenfasern oder Polypropylenfasern, Polyesterfasern, insbesondere auf Basis von aromatischen Polyestern wie Polyethylenterephthalat sowie Polyvinylalkohol eingesetzt werden, wobei die vorgenannten Polyethylenfasern und Polyethylenterephthalatfasern bevorzugt verwenden werden.

Aus den erhaltenen Zellstoffen können u.a. dem TAD (Through Air Drying) - Verfahren oder nach konventionellen Trocknungsverfahren geeignete bahnförmige, trockengekreppte oder auch ungekreppte Rohtissueprodukte hergestellt werden, welche gegebenenfalls noch mit geeigneten Nassfestmitteln und üblichen Hilfs- oder Zusatzstoffen versetzt werden können und dann auf einer Walzenstation zu mehrlagigen Hygieneprodukten verarbeitet werden können. Die einzelnen Lagen der Hygienepapiere können sowohl jeweils ein gleiches, aber auch jeweils ein zueinander verschiedenes Flächengewicht aufweisen. Vorzugsweise liegt ihr Flächengewicht im Bereich von 12 bis 50 g/m², insbesondere im Bereich von 12 bis 40 g/m² und besonders bevorzugt im Bereich von 14 bis 30 g/m².

Die erfindungsgemäße Verpackungsfolie zeichnet sich insbesondere auch dadurch aus, dass sie an beliebigen Stellen mit einer Öffnung versehen werden kann, ohne dass dazu ein großer technischer Aufwand nötig ist. Gegebenenfalls kann der Wiederverschluß der Verpackungsfolie auch durch eine zusätzliche klebende Zwischenschicht zwischen den einzelnen Schichten erreicht werden.

Weiterhin erstreckt sich die vorliegende Erfindung auch ein Verfahren zur Herstellung der erfindungsgemäßen Verpackungsfolie, wobei mit Hilfe von rotierenden Messern oder von Lasern Einschnitte in die verschiedenen Schichten aus elastischen Kunstostoffen vorgenommen werden. Dieses Verfahren kann sowohl im sogenannten Convertingteil bei der Herstellung von derartigen Verpackungen, als auch in den nachfolgenden Druck- und Konfektioniermaschinen ausgeführt werden. Entsprechend der jeweiligen Beschaffenheit der einzelnen elastischen Kunststoffe muss dabei im Falle des Einsatzes von rotierenden Messern auf eine geeignete Rotationsgeschwindigkeit geachtet werden. Falls das erfindungsgemäße Verfahren mit Hilfe von Lasern durchgeführt wird, sollte in Abhängigkeit von der Art der zu behandelnden Kunststoffe eine geeignete Wellenlänge für den zu verwendeten Laser eingestellt werden.

Die Erfindung wird nachfolgend an Hand einer Zeichnung näher erläutert, wobei die Darstellungen rein schematisch ausgeführt sind.

Die nachstehende Figur zeigt einen Querschnitt durch eine erfindungsgemäße Verpackungsfolie, bestehend aus zwei elastischen Außenschichten (1) und (3) und einer harten, spröden, mittleren Schicht (2). Alle drei Verpackungsschichten sind aus Polyethylenen mit unterschiedlicher Weichheit aufgebaut, wobei die mittlere Schicht (2) eine Glastemperatur (Tg) von mehr als 25°C aufweist und die beiden äußeren Schichten (1) und (3) Glastemperaturen (Tg) von weniger als 0°C besitzen.

In den beiden äußeren Schichten (1) und (3) werden durch rotierende Messer jeweils Einschnitte (4) und (5) angebracht, welche leicht in die mittlere Schicht (2) hineinragen. Im Falle einer Krafteinwirkung bildet sich an der kürzesten Verbindungslinie (6) zwischen den jeweiligen Enden der Einschnitte (4) und (5) eine Sollbruchstelle innerhalb des spröden Materials der mittleren Schicht (2). Die Verbindungslinie (6) bildet dann den Öffnungsspalt der Verpackungsfolie.

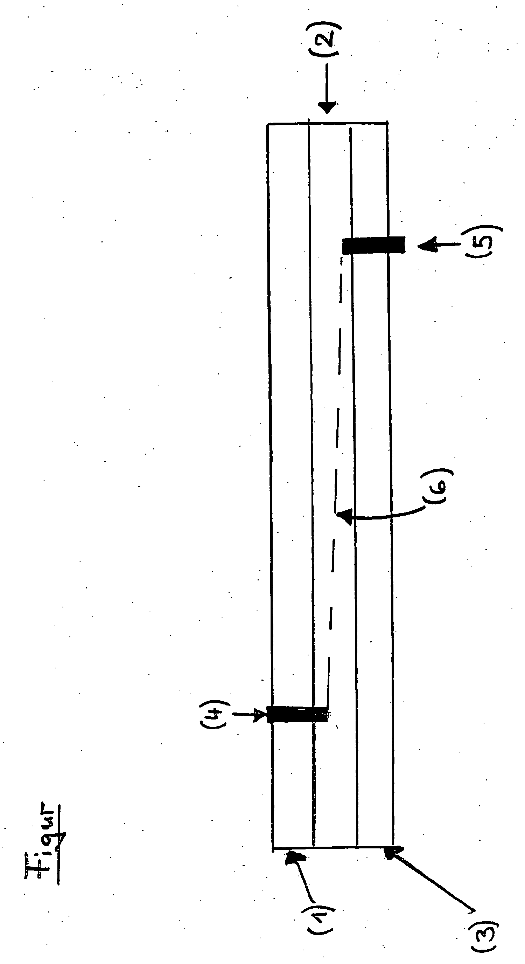

## Patentansprüche

1. Verpackungsfolie aus Kunststoff, bestehend aus mindestens drei verschiedenen Schichten, wobei die beiden äußeren Schichten (1, 3) aus elastischen Kunststoffen bestehen und jeweils mit einem Einschnitt (4, 5) im wesentlichen senkrecht zur Folienoberfläche versehen sind und die zwischen den beiden äußeren Schichten sich befindende mittlere Schicht (2) aus harten, spröden Kunststoffen besteht und keinen Einschnitt oder nur einen solchen Einschnitt aufweist, der weniger als 50 % der Schichtdicke der mittleren Schicht beträgt.

2. Verpackungsfolie nach Anspruch 1, wobei als Kunststoffe Polyolefine verwendet werden.

3. Verpackungsfolie nach Anspruch 2, wobei als Kunststoffe Polyethylene verwendet werden.

4. Verpackungsfolie nach den Ansprüchen 1 bis 3, wobei die elastischen Kunststoffe der beiden äußeren Schichten eine Glastemperatur (Tg) von weniger als 0°C aufweisen.

5. Verpackungsfolie nach den Ansprüchen 1 bis 4, wobei die harten, spröden Kunststoffe der mittleren Schicht eine Glastemperatur (Tg) von mehr als 25°C aufweisen.

6. Verpackungsfolie nach den Ansprüchen 1 bis 5, wobei der Winkel zwischen der Folienoberfläche der äußeren Schichten und den jeweiligen Einschnitten mindestens 50° beträgt.

7. Verpackungsfolie nach den Ansprüchen 1 bis 6, wobei die Einschnitte an der sogenannten Druckmaschine durchgeführt werden.

8. Verpackungsfolie nach den Ansprüchen 1 bis 7, wobei diese eine Dicke von 0,1 bis 2 mm aufweist.

9. Verwendung einer Verpackungsfolie gemäß den Ansprüchen 1 bis 8 zur Verpackung von Hygienepapieren.

10. Verfahren zur Herstellung einer Verpackungsfolie aus Kunststoff gemäß einem der Ansprüche 1 bis 8, wobei mit Hilfe von rotierenden Messern oder von Lasern Einschnitte in die verschiedenen Schichten aus elastischen Kunststoffen vorgenommen werden.

## Claims

1. Packaging film made of synthetic material, consisting of three or more different layers, wherein the two outer layers (1, 3) are made of elastic synthetic materials and each provided with an incision (4, 5) substantially perpendicularly to the film surface, and the middle layer (2) located between the two outer layers is made of hard, brittle synthetic materials and has no incision or only one such incision which is less than 50% of the layer thickness of the middle layer.

2. Packaging film according to claim 1, wherein polyolefins are used as the synthetic materials.

3. Packaging film according to claim 2, wherein polyethylenes are used as the synthetic materials.

4. Packaging film according to claims 1 to 3, wherein the elastic synthetic materials of the two outer layers have a glass transition temperature (Tg) of less than 0°C.

5. Packaging film according to claims 1 to 4, wherein the hard, brittle synthetic materials of the middle layer have a glass transition temperature (Tg) of more than 25°C.

6. Packaging film according to claims 1 to 5, wherein the angle between the film surface of the outer layers and the respective incisions is at least 50°.

7. Packaging film according to claims 1 to 6, wherein the incisions are made on the so-called printing machine.

8. Packaging film according to claims 1 to 7, wherein it has a thickness from 0.1 to 2 mm.

9. Use of a packaging film according to claims 1 to 8 for the packaging of toilet papers.

10. Method for the manufacture of a packaging film made of synthetic material according to any of claims 1 to 8, wherein by means of rotating blades or lasers, incisions are made in the different layers made of elastic synthetic materials.

## Revendications

1. Film d'emballage en matière plastique, composé d'au moins trois couches différentes, les deux couches extérieures (1, 3) étant composées de matières plastiques élastiques et munies chacune d'une entaille (4, 5) sensiblement perpendiculaire à la surface du film, et la couche intermédiaire (2) disposée entre les deux couches extérieures étant composée de matières plastiques dures cassantes et ne présentant aucune entaille ou seulement une entaille inférieure à 50 % de l'épaisseur de couche de la couche intermédiaire.

2. Film d'emballage selon la revendication 1, dans lequel on utilise des polyoléfines comme matières plastiques.

3. Film d'emballage selon la revendication 2, dans lequel on utilise des polyéthylènes comme matières plastiques.

4. Film d'emballage selon les revendications 1 à 3, dans lequel les matières plastiques élastiques des deux couches extérieures présentent une température de transition vitreuse (Tg) inférieure à 0 °C.

5. Film d'emballage selon les revendications 1 à 4, dans lequel les matières plastiques dures cassantes de la couche intermédiaire présentent une température de transition vitreuse (Tg) supérieure à 25 °C.

6. Film d'emballage selon les revendications 1 à 5, dans lequel l'angle entre la surface de film des couches extérieures et les entailles respectives est d'au moins 50°.

7. Film d'emballage selon les revendications 1 à 6, dans lequel les entailles sont réalisées sur la machine dite à imprimer.

8. Film d'emballage selon les revendications 1 à 7, dans lequel celui-ci présente une épaisseur de 0,1 à 2 mm.

9. Utilisation d'un film d'emballage selon les revendications 1 à 8 pour emballer des papiers hygiéniques.

10. Procédé de fabrication d'un film d'emballage en matière plastique selon une des revendications 1 à 8, dans lequel des entailles sont pratiquées dans les différentes couches en matières plastiques élastiques à l'aide de couteaux rotatifs ou de lasers.
